## Europäisches Patentamt
## European Patent Office
## Office européen des brevets

(19)

(11) Numéro de publication: **0 006 072**
**B1**

(12) **FASCICULE DE BREVET EUROPEEN**

(45) Date de publication du fascicule de brevet: **01.07.81**

(51) Int. Cl.³: **B 60 P 3/34**

(21) Numéro de dépôt: **79430011.1**

(22) Date de dépôt: **25.04.79**

(54) Caravane auto-extensible en largeur et en hauteur.

(30) Priorité: **26.04.78 FR 7813273**

(43) Date de publication de la demande:
**12.12.79 Bulletin 79/25**

(45) Mention de la délivrance du brevet:
**01.07.81 Bulletin 81/26**

(84) Etats Contractants Désignés:
**BE CH DE GB IT NL SE**

(56) Documents cités:
DE - A - 1 455 486
FR - A - 1 491 349
FR - A - 2 210 522
FR - A - 2 236 686
US - A - 3 596 416
US - A - 3 768 855

(73) Titulaire: **Loniewski, Robert Alfred Antoine Marie**
**40, Avenue Fernandel**
**F-13012 Marseille (FR)**

(72) Inventeur: **Loniewski, Robert Alfred Antoine Marie**
**40, Avenue Fernandel**
**F-13012 Marseille (FR)**

Courier Press, Leamington Spa, England.

Caravane auto-extensible en largeur et en hauteur

La présente invention intéresse le secteur des caravanes et autocaravanes en dur pliables et extensibles de façon automatique.

Les caravanes pliantes en dur, actuellement sur le marché, présentent, à n'en pas douter, de sérieux avantages:abaissement du centre de gravité-plus grande stabilité-confort-réduction importante de la résistance à l'air et de la consommation de carburant-meilleure visibilité-possibilité de parking etc.

Mais leur extension comme pliage appellent encore du temps et des efforts.

L'emploi, depuis quelques années, de moyens compensateurs (ressorts ou vérins à gaz comprimé ...) constitue, sans doute, un progrés, mais ne fait que réduire très partiellement les forces et le temps nécessaires.

De toutes façons, il n'y a encore aucune caravane pliante vraiment automatique.

Par ailleurs, *les caravanes pliantes actuellement construites ne permettent* pour la plupart *qu'une extension en hauteur.* En position d'extension la surface habitable reste la même que sur la route, c'est à dire, relativement faible (de 6 à 8 m2 seulement).

La surface habitable des autocaravanes extensibles en hauteur est plus réduite encore.

Quelques types de caravanes sont extensibles en surface mais, pas en hauteur. Il en est ainsi des caravanes composées de deux coques télescopiques dont l'une est fixe et l'autre coulisse dans la première, entraînant par la même, une extension dans le sens de la largeur (ou de la longueur).

En fait, parmi les caravanes pliantes en dur actuellement sur le marché ou ayant seulement fait l'objet d'une demande de brevet, très peu sont à la fois extensibles en hauteur et en surface et les rares qui le sont, n'ont ni la simplicité, ni l'automaticité du type proposé.

La demande de brevet de Mr. KUHN (D.E. n° 1.455.486) a un dispositif de pliage qui se rapproche de celui qui est proposé, mais les ensembles latéraux ne sont pas monoblocs, ce qui complique l'extension comme le pliage et les parties supérieures de l'avant et de l'arrière coulissent au lieu de basculer, ce qui entraîne une hauteur minima de 1,40 m en position pliée.

En ce qui concerne le fonctionnement, toute une série d'opérations, notamment pour la mise en place des ensembles latéraux et des ailes du pavillon, doit être faite manuellement.

Le brevet de Mr. HOJKA (U.S.A. n° 3.596.416) présente également quelques similitudes avec l'objet de la présente invention. Mais, des différences caractéristiques séparent les deux projets.

Au lieu d'ensembles latéraux monoblocs et basculant à la base sous la poussée de verins, Mr. HOJKA a prévu de ensembles composés de deux parties: une première, coulissant horizontalement, reliée par des charnières à une seconde partie susceptible de basculer. Quant aux parties supérieures des faces avant et arrière, elles coulissent verticalement.

Un tel système ne permet pas la continuité de plancher, du plafond et des faces antérieure et postérieure et entraîne sur route une hauteur minima de 1,40 m.

Les moyens d'actionnement sont par ailleurs composites; Le coulisement horizontal des ensembles latéraux est assuré manuellement. Quant à la manoeuvre de la partie supérieure des ensembles latéraux, elle appelle, en sus d'un système hydraulique, tout un jeu de cables et de poulies.

— La présente invention consiste en la réalisation d'un habitacle mobile du type caravane ou autocaravane pliante, comprenant:
— Un corps principal fixé au chassis, constitué d'un plancher et des parties inférieures des parois avant et arrière.
— Un pavillon pouvant s'élever à la verticale et s'étendre en largeur.
— Les parties supérieures au corps principal des parois avant et arrière.
— Deux ensembles latéraux liés par des charnières à la base du corps principal et qui, en basculant, définissent les parois latérales en accroissant en même temps la surface du plancher.
— Les moyens d'actionnement du pavillon et des ensembles latéraux.

Un tel habitacle caractérisé (revendication 1) par le fait que les ensembles latéraux sont monoblocs, et comportent chacun, perpendiculairement à la partie formant plancher, une paroi principale formant face latérale, ainsi que deux parois destinées à compléter latéralement les faces avant et arrière et que la partie supérieure des parois avant et arrière sont susceptibles de passer de l'horizontale à la verticale et vice et versa.

— Cet habitacle mobile peut disposer pour son extension et son pliage de moyens d'actionnement hydrauliques ou pneumatiques.

Ces moyens comprennent une moto-pompe ou un compresseur alimenté par batterie, un bloc de distribution, un système de commande et trois paires de verins agissant suivant un cycle déterminé, une pair pour le pavillon et une paire pour chaque ensemble latéral. (revendication 2).

— La paire de vérins du pavillon est à double effet et est destinée à élever, outre le pavillon, les parties supérieures des parois principales avant et arrière. Les paires des ensembles latéraux sont également à double effet et agissent à l'intérieur même des parois (revendication 3).

— Le bloc de distribution peut être commandé par voie manuelle, pneumatique ou électrique et, permet ainsi d'actionner les verins suivant le cycle déterminé. Lors de l'extension, sont ainsi assurés, dans un premier temps: l'élévation du pavillon et des parties supérieures des parois avant et arrière; dans un second temps: le basculement de l'ensemble latéral disposé au dessus de l'autre en position repliée entraînant lui-même l'extension d'une aile du pavillon et, dans un troisième temps, le basculement de l'ensemble latéral situé au dessous, entraînant l'extension de l'autre aile du pavillon. Le bloc de distribution permet le pliage selon le cycle inverse. (Revendication 4).

— Le système de commande peut consister en des contacts actionnés en fin de course par le basculement de certains verins ou le mouvement de leur tige, ce qui permet de commander le bloc de distribution et de passer d'un mouvement à un autre en suivant le cycle déterminé. (Revendication 5).

Pour l'extension et le pliage des caravanes et autocaravanes, la présente invention permet d'atteindre un premier résultat: *l'automaticité complète.*

Une seule pression sur un contact et l'extension comme le pliage s'effectuent automatiquement et dans le minimum de temps.

A ce premier résultat s'en ajoute un second plus intéressant encore, à la seule condition d'adopter pour la carrosserie elle-même une structure adaptée.

La nouvelle structure proposée permet en effet d'obtenir, non pas un simple renflement latéral, mais une véritable extensibilité en surface comme en hauteur.

Grâce au système proposé, la surface peut ainsi passer de 6 à 10 m2, et le volume de 4 à 18 m3 (rapport supérieur à 4).

Dans la conception de caravanes extensibles en dur, les inventeurs se sont, jusqu'à maintenant, heurtés à l'alternative suivante:

— Ou bien atteindre une certaine automaticité par des moyens mécaniques, électriques ou hydrauliques, mais s'en tenir à une simple extension en hauteur et au mieux, à un renflement latéral, ou bien, viser à la fois à une extension en hauteur et en largeur, mais, recourir à cet effet, à des moyens d'actionnement très composites, notamment à des manoeuvres manuelles. (Invention de M. M. HOJKA et KUHN) et, renoncer par la même, à une véritable automaticité.

Grâce à des ensembles latéraux monoblocs et à un système hydraulique approprié, la présente invention permet d'atteindre à la fois les deux résultats souhaitables: l'extension en hauteur et en largeur, et en même temps l'automaticité totale.

Le gain de surface et de volume obtenu permet, par ailleurs, d'adopter des schémas d'installation absolument nouveaux et de sortir radicalement des chemins battus et des cercles vicieux dans lesquels se débattent les constructeurs.

Le supplément de largeur permet notamment, de cumuler les avantages d'un dispositif "à la française" (nette séparation de la cuisine) et, ceux d'un dispositif "à l'européenne" (importance donnée aux chambres et à l'intimité) (Fig. 6), ce qui est actuellement impossible dans des caravanes de moins de 4,50 m de longueur.

Le système proposé permet aussi, une série d'innovations annexes (remplacement des lits-dinettes relativement peu pratiques par des lits-divans constamment faits (6 et 7), remplacement des coffres peu accessibles par une petite commode (8) — Possibilité de transformation de la salle de séjour en deux chambres absolument distinctes — installation d'un cabinet de toilette et d'un W.C. — aménagement d'un bloc-cuisine de plus d' 1,60 m de long (10).

Une variante peut également permettre d'obtenir une extension en longueur au lieu d'une extension en largeur.

Enfin, le nouveau système peut être aisément adopté pour la construction d'autocaravanes et éliminer ainsi les inconvénients inhérents à cette formule, notamment l'encombrement sur route ou au parking, la résistance à l'air et le manque de volume habitable.

Les moyens mis en oeuvre préférentiellement sont illustrés par les figures annexées à la présente description.

— La figure 1, représente une vue arrière en extension d'un mode de réalisation de la caravane.

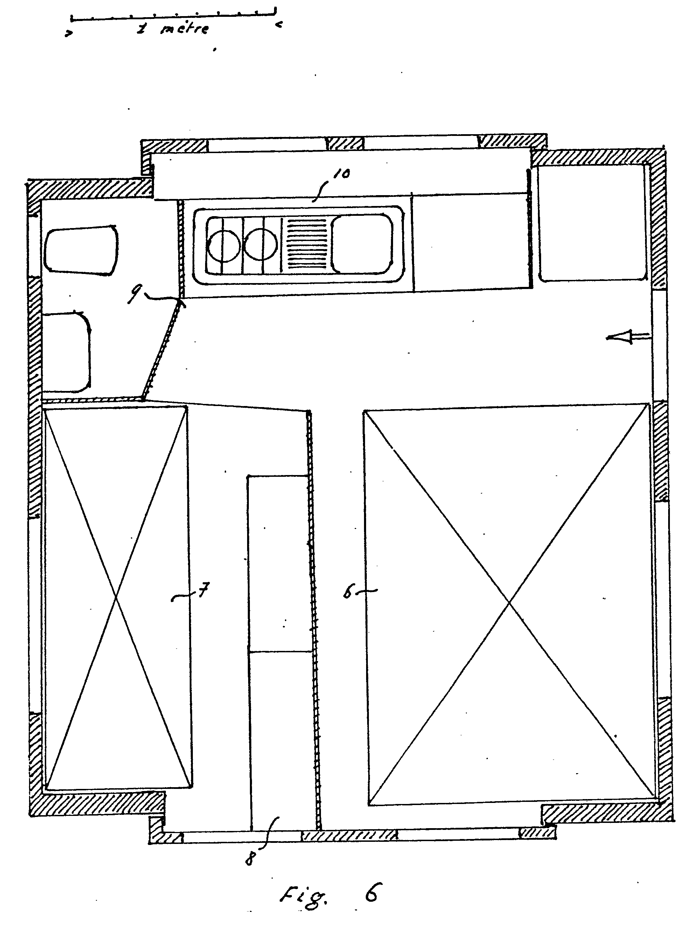

— La figure 2, représente une vue arrière de la caravane pliée de la figure 1.
— La figure 3, représente le dispositif de manoeuvre des ensembles latéraux vus en extension de la caravane des figures 1 et 2.
— La figure 4, représente le dispositif de manoeuvre de la figure 3, vu en position de repli.
— La figure 5 représente un schéma du système hydraulique permettant le déploiement ou le repliage de la caravane des figures 1 et 2, vu au début de l'extension.
— La figure 6 représente une vue en plan du dispositif intérieur de nuit de la caravane des figures 1 et 2.

La structure représentée par les figures comprend:

— Un corps principal fixé au chassis (1) constitué d'un plancher et des parties inférieures des parois avant et arrière.

— Un pavillon pouvant s'élever à la verticale et s'étendre en largeur grâce à deux ailes latérales (2).

— Les parties supérieures des parois avant et arrière (3) reliées au corps principal et susceptibles de passer de l'horizontale à la verticale et vice et versa.

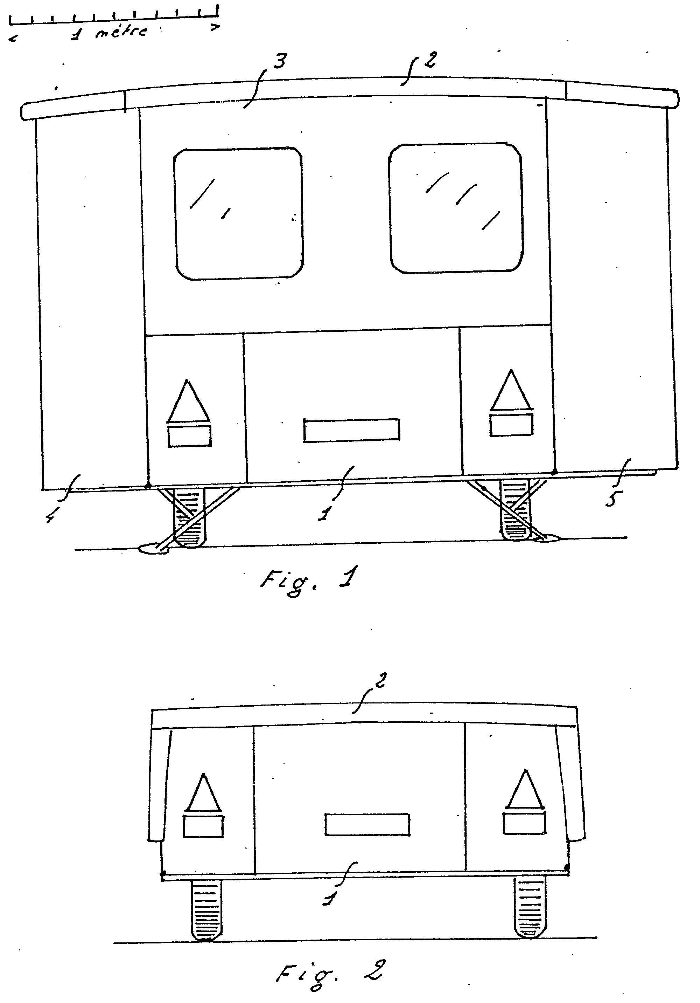

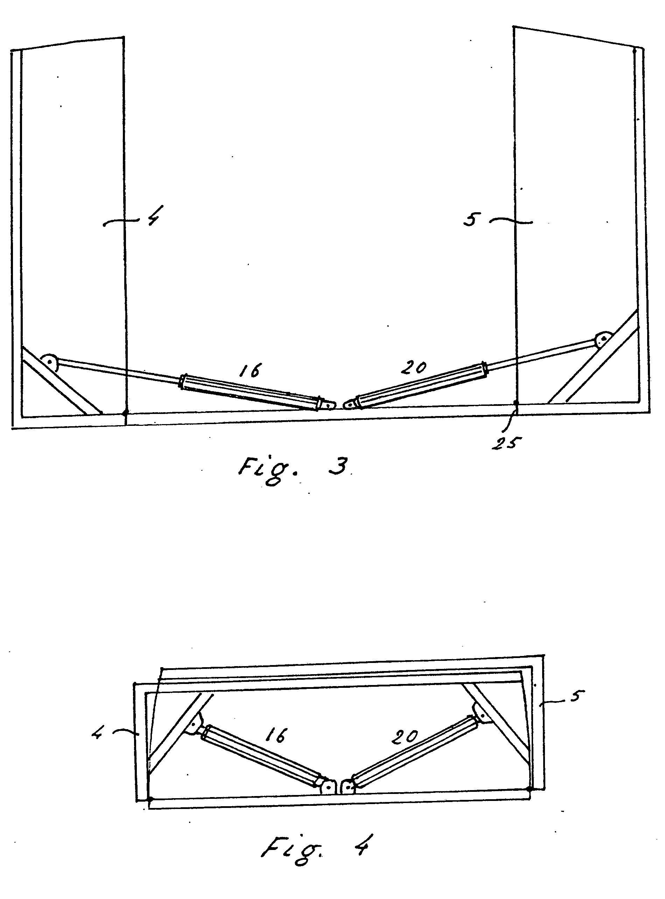

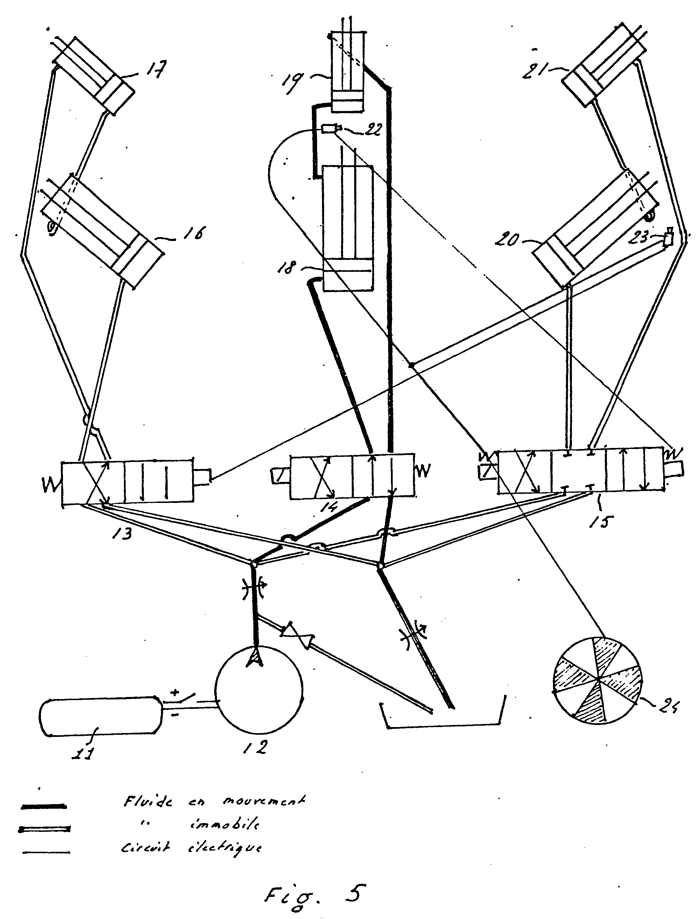

— Deux ensembles latéraux (figures n° 4 et 5) liés par des charnières à la base du corps principal et susceptiblesde basculer pour se mettre en position verticale ou horizontale (figures 3 et 4). Ces ensembles sont monoblocs et comportent chacun, perpendiculairement à la partie formant plancher, une paroi principale, formant face latérale ainsi que deux parois destinées à compléter latéralement les faces avant et arrière (figure 1 n° 4 et 5).

Pour l'extension et le pliage de la structure proposée est prévu un système hydraulique ou pneumatique.

Le système (figure 5) comprend essentiellement: une batterie (ou un générateur) (11), une moto-pompe (ou un compresseur) (12) des distributeurs (13—14 et 15), et des verins appropriés (16 à 21).

La batterie propre à la caravane, est normalement rechargée en cours de route ou dans une aire de stationnement. Sa puissance doit être égale ou supérieure à 2 KW.

Le générateur de pression (moto-pompe ou compresseur) branché sur la batterie doit être muni d'un réservoir à huile ou à air comprimé.

Les distributeurs montés ou non sur bloc, peuvent être commandés manuellement, mécaniquement, par un système séquentiel ou, de préférence, électriquement, grâce à des solénoîdes et aux contacts nécessaires (v. figure 5 n° 22 et 23).

Pour l'élévation du pavillon et des parties supérieures des parois avant et arrière, est prévue une paire de verins à une expansion et à double effet (v. figure 5—18 et 19). L'action de leur tige doit être amplifiée par des bras de levier appropriés.

Mais il est aussi possible de recourir, à cet effet, à une paire de verins télescopiques.

Pour le basculement de chaque ensemble latéral autour de leur axe de rotation (figure 3 n° 25) est prévue une paire de verins (v. figure 3 et 5, 16 et 17, 20 et 21). Ces verins devront être à double effet et agir à l'intérieur même des parois destinées à compléter latéralement les faces avant et arrière.

La verin 16 devant fonctionner en même temps que le verin 17, le 18 en même temps que le 19, et le 20 en même temps que le 21, la synchronisation peut être assurée par la réduction de débit appropriée, mais l'est de façon plus parfaite par un transfert de fluide d'un verin à l'autre (v. figure 5). Les cylindrées de 16, 18 et 20, côté tige, doivent être, en ce cas, respectivement égales à celles de 17, 19 et 21, côté piston.

La structure fonctionne de la manière suivant:

— Extension

Après la mise de la caravane dans une position stable et horizontale, ce qui est principalement obtenu en agissant sur les quatre verins mécaniques fixés sur le chassis, l'extension n'appelle que deux opérations:

— Une action sur le bouton de distribution (figure 5—24).

— La mise en route de la motopompe ou du compresseur par simple pression sur le contact de la mise en marche.

L'extension se réalise alors automatiquement en trois temps et en une à deux minutes seulement.

1er temps — extension simultanée des verins 18 et 19 (figure 5)

Le fluide est d'abord amené grâce au distributeur 14 dans la partie inférieure du verin 18. Les verins 18 et 19, synchronisés, élèvent le pavillon et celui-ci entraîne lui-même, grâce à des rails appropriés, les parties supérieures avant et arrière.

Dans le système de distribution préconisé (à commande électrique) le verin 18, en fin de course, agit sur un contact (22) qui déclenche la réalisation du 2° temps.

— 2° temps — extension simultanée des vérins 20 et 21 (figure 3, 4 et 5)

Grâce au distributeur 15, le fluide agit à la partie inférieure du vérin 20 et, par voie de transfert, à la partie inférieure du 21.

Sous l'action de ces deux vérins, l'ensemble latéral de droite bascule par rapport au corps principal.

Le panneaux latéral qui était en position verticale se met à l'horizontale et prolonge ainsi le plancher. La paroi principale qui était horizontale devient la face de droite et les deux petites parois perpendiculaires viennent compléter les panneaux avant et arrière.

En basculant, la face principale de droite entraine également, grâce à un bras articulé, une première extension latérale du pavillon.

Dans le système de distribution à commande électrique, le vérin 20, en fin de course, agit sur un contact (23) qui déclenche la réalisation du 3° temps.

— 3° temps — extension simultanée des vérins 16 et 17

Grâce au distributeur 13, le fluide agit à la partie inférieure des vérins 16 et 17, et, en s'étendant, ces deux vérins agissent sur l'ensemble de gauche de façon absolument similaire à celle des vérins 20 et 21. En basculant, l'ensemble de gauche entraîne la seconde extension latérale du pavillon.

En fin de course et grâce à un limiteur de pression incorporé au groupe électro-pompe ou au compresseur, le fluide retourne au réservoir ou s'échappe. Il suffit de fermer le contact.

La caravane est alors entièrement dépliée. Il n'y a plus qu'a procéder aux quelques mises en place nécessaires à l'intérieur, opérations qui peuvent être simplifiées au maximum et effectuées à l'abri et dans le minimum de temps.

— *Repliage*

Le repliage s'effectue également en 3 temps et de façon entièrement automatique. Il suffit, après avoir mis en ordre l'intérieur de la caravane, d'appuyer sur le bouton de distribution et sur le contact de mise en marche.

— *Possibilité de manoeuvre manuelle*

Au cas où la batterie ne serait pas suffisamment chargée ou en cas de panne quelconque du système hydraulique, on peut en ouvrant simplement une vanne, libérer le fluide et réaliser manuellement les opérations précitées.

*Voici quelques chiffres caractéristiques du prototype en cours de finition*

| | | |
|---|---|---|
| Hauteur totale sur route | : | 1m,15 |
| Hauteur totale après dépliage | : | 2m,35 |
| Longueur caisse | : | 3m,30 |
| Longueur hors tout | : | 4m,70 |
| Largeur hors tout sur sur route | : | 2m,05 |
| Largeur après dépliage | : | 3m,20 |
| Poids à vide (aproximatif) | : | 720 Kgs |
| Charge utile | : | 150 Kgs |

A titre de variante, au lieu de caravanes à extension latérale, on peut réaliser des caravanes à extension longitudinale.

La structure précédemment décrite doit être en ce cas inversée.

Ce sont les faces de droite et de gauche qui devront être en deux parties, dont une fixe attenante au corps principal et l'autre, mobile et amenée à la verticale du fait de l'élévation du pavillon.

Au lieu d'être latéraux, les deux ensembles basculants doivent se trouver respectivement placés à l'avant et à l'arrière du corps principal.

En s'étendant successivement sous l'action de leurs vérins, ces deux ensembles amènent la mise en place des parois avant et arrière et le prolongement des côtés en même temps qu'une extension longitudinale de la surface du plancher.

L'adoption des structures et des moyens d'actionnement prèvus peut permettre de parvenir à des caravanes de type tout à fait nouveau fonctionnant automatiquement et s'étendant à la fois en surface et en hauteur, ce qui supprime less sujétions entraînées par la limitation de largeur et permet d'améliorer considérablement les schémas d'installation intérieure et par là même, le confort et l'habitabilité.

On peut également appliquer cette solution pour la réalisation de camping-cars auto-extensibles et pallier, par là même, les inconvénients que présentent ces types d'habitacles.

**Revendications**

1. Habitacle mobile du type caravane ou autocaravane pliante comprenant:

— Un corps principal (1) fixé au châssis constitué d'un plancher et des parties inférieures des parois avant et arrière;
— Un pavillon (2) pouvant s'élever à la verticale et s'étendre en largeur;
— Les parties supérieures (3) au corps principal des parois avant et arrière;
— Deux ensembles latéraux (4, 5) liés par des charnières (25) à la base du corps principal (1) et qui, en basculant, définissent les parois latérales en accroissant en même temps la surface du plancher;
— Des moyens d'actionnement du pavillon et des ensembles latéraux; caractérisé par le fait que les ensembles latéraux (4, 5) sont monoblocs et comportent chacun, perpendiculairement à la partie formant plancher, une paroi principale formant face latérale et deux parois destinées à compléter latéralement les faces avant et arrière, et que les parties supérieures (3) des parois avant et arrière sont susceptibles de passer de l'horizontale à la verticale et vice et versa.

2. Habitacle mobile du type caravane ou autocaravane pliante, selon la revendication 1, dont les moyens d'actionnement sont hydrauliques ou pneumatiques, caractérisé par le fait que ces moyens comprennent une moto-pompe ou un compresseur (12) alimenté par batterie (11), un bloc de distribution (13, 14, 15), un système de commande (22, 23, 24) et trois paires de vérins (16 à 21) agissant suivant un cycle déterminé, une paire (18, 19) pour le pavillon, et une paire (16, 17 et 20, 21) pour chaque ensemble latéral (4, 5).

3. Habitacle mobile du type caravane ou autocaravane pliante, selon la revendication 2, caractérisé par le fait que la paire de vérins (18, 19) du pavillon est à double effet et est destinée à élever, outre le pavillon (2), les parties supérieures (3) des parois principales avant et arrière, et, en ce que les paires (16, 17 et 20, 21) des ensembles latéraux sont à double effet et agissent à l'intérieur même des parois.

4. Habitacle mobile du type caravane ou autocaravane pliante, selon l'une des revendications 2 et 3, caractérisé par le fait que le bloc de distribution (13, 14, 15) est commandé par voie manuelle, pneumatique ou électrique et, permet d'actionner les vérins suivant le cycle déterminé. Lors de l'extension, sont ainsi assurés dans un premier temps: l'élévation du pavillon (2) et des parties supérieures (3) des parois avant et arrière; dans un second temps: le basculement de l'ensemble latéral (5) disposé au dessus de l'autre en position repliee, entraînant lui-même l'extension d'une aile du pavillon, et, dans un troisième temps, le basculement de l'ensemble latéral (4) situé au dessous, entraînant l'extension de l'autre aile du pavillon. Le bloc de distribution permet le pliage selon le cycle inverse.

5. Habitacle mobile du type caravane ou autocaravane pliante, selon l'une des revendications 2 à 4, caractérisé par le fait que le système de commande (22, 23, 24) consiste en des contacts (22, 23) actionnés en fin de course par le basculement de certains vérins ou le mouvement de leur tige, ce qui permet de commander le bloc de distribution et de passer d'un mouvement à un autre, suivant le cycle déterminé.

## Patentansprüche

1. Bewegliche Wohnkabine vom Typ Wohnwagen oder zusammenklappbarer Autowohnwagen die Folgendes umfaßt:

— Ein am Fahrgestell angebrachtes Hauptgehäuse (1) bestehend aus einem Fußboden und den unteren Teilen der Vorder- und Rückwände.
— Ein Pavillon (2), den man vertikal erhöhen und in die Breite vergrößern kann.
— Die oberen Teile (3) der Vorder- und Rückwände des Hauptgehäuses.
— Zwei Seitenwandeinheiten (4, 5), die durch Scharniere (25) am Unterbau des Hauptgehäuses (1) befestigt sind und die durch Hochklappen die Seitenwände bilden und gleichzeitig die Oberfläche des Fußbodens vergrößern.
— Die Betätigungsmöglichkeiten des Pavillons und der Seitenwandeinheiten (4, 5) sind durch die Tatsache gekennzeichnet, daß die Seitenwandeinheiten aus je einem Stück sind und jede Einheit, senkrecht zum Fußbodenteil, eine Hauptwand bildet, die eine seitenfläche und zwei Wändehat, die dazu bestimmt sind, an den Seiten die Vorder- und Rückfläche zu vervollständigen, und daß die oberen Teile (3) der Vorderund Rückwände von der waagrechten Lage in die senkrechte gebracht werden können und umgekehrt.

2. Eine bewegliche Wohnkabine vom Typ Wohnwagen older zusammenklappbarer Autowohnwagen, wie in Forderung 1, deren Betätigungsmöglichkeiten hydraulisch oder pneumatisch sind. Die Betätigung ist durch folgende Mittel möglich: Eine Motorpumpe (12) oder ein Kompressor, durch Batterie (11) gespeist, ein Verteilerblock (13 à 15), ein Steuerungssystem (22 à 24) und drei Windenpaare (16 à 21), die nach einer vorbestimmten Reihenfolge zu betätigen sind. Ein Paar (18, 19) für den Pavillon und je ein Paar (16, 17, 20, 21) für die Seiteneinheiten (4, 5).

3. Eine bewegliche Wohnkabine vom Typ Wohnwagen oder zusammenklappbarer Autowohnwagen, wie in Forderung 2, durch die Tatsache gekennzeichnet, daß das Windenpaar (18, 19) des Pavillons eine zweifache Wirkung hat und dazu bestimmt ist außer den Pavillon (12) auch die oberen Teile (3) der Vorder- und Rückwände zu erhöhen und, daß außerdem die Paare (16, 17, 20, 21) der Seiteneinheiten eine zweifache Wirkung haben und im Innern selbst der Wände tätig sind.

4. Eine bewegliche Wohnkabine vom Typ Wohnwagen oder zusammenklappbarer Autowohnwagen, wie in einer der Forderungen 2 und 3, durch die Tatsache gekennzeichnet, daß der Verteilerblock (13 à 15) durch die Hand, pneumatisch oder elektrisch bedient wird und erlaubt die Winden nach der vorbestimmten Reihenfolge zu betätigen. Bei der Vergrößerung werden auf diese Weise folgende Schritte ermöglicht: 1. Die Erhöhung des Pavillons (2) und der oberen Teile (3) der Vorder- und Rückwände. 2. Das Schwenken der Seiteneinheit (5), die über der anderen zusammengeklappten Einheit liegt und die selbst die Vergrößerung eines Pavillonflügels nach sich zieht. Und 3. das Schwenken der unteren Seiteneinheit (4), die die Vergrößerung des anderen Pavillonflügels nach sich zieht. Der Verteilerblock erlaubt das Zusammenklappen in umgekehrter Reihenfolge.

5. Eine bewegliche Wohnkabine vom Typ Wohnwagen oder zusammenklappbarer Autowohnwagen, wie in einer der Forderungen 2 bis 4, durch die Tatsache gekennzeichnet, daß das Steuerungssystem (22 à 24) auf Kontakten (22, 23) beruht, die am Schluß durch das Schwenken bestimmter Winden oder durch das Bewegen ihrer Schäfte betätigt werden, was erlaubt den Verteilerblock zu steuern und von einer Bewegung zur anderen überzugehen, nach der vorbestimmten Reihenfolge.

## Claims

1. Mobile habitation, like a pliant caravan or a camping-car comprising:

— a main body (1) fixed to the chassis, composed of a floor and the lower parts of the front and back walls;

— a roof (2) which can be raised to a vertical position and can be extended horizontally;

— the parts above the main body (3) of the front and back walls;

— two lateral units (4, 5) fixed by hings (25) to the base of the main body, which, by tipping-up, determine the side walls and also increase the floor surface;

— the means of working the roof and the lateral units, characterized by the fact that the lateral units (4 & 5) are in one piece and each comprise, perpendicularly to the part which forms the floor, one main wall creating a lateral side and two walls designed the complete laterally the front and back faces, and that the upper parts (3) of the front and back walls move from a horizontal to a vertical position and vice-versa.

2. Mobile habitation like a pliant caravan or a camping-car, according to the first claiming and which is hydraulically or pneumatically driven, characterized by the fact that these means comprise a motor-driven pump or a compressor (12) supplied by a battery (11), a distribution block (13, 14 & 15), an operating system (22, 23 & 24) and three pairs of jacks (16 à 21) acting, according to a predetermined cycle, one pair (18 & 19) for the roof and one pair (16, 17, 20 & 21) for each lateral unit (4 & 5).

3. Mobile habitation like a pliant caravan or a camping-car, according to the second claiming, characterized by the fact that the pair of jacks (18 & 19) for the roof has a dual purpose, and is designed to raise, beyond the roof, the upper parts (3) of the main front and back walls, and by the fact that the pairs (16, 17, 20 & 21) of the side units have a dual use and act inside the walls.

4. Mobile habitation like a pliant caravan or a camping-car, according to one of the second and third claimings, characterized by the fact that the distribution block (13, 14 & 15) is controlled manually, pneumatically or electrically and allows the jack to act according to the predetermined cycle. At the time of extension are assured: firstly: the raising of the roof (2) and the upper parts (3) of the front and back walls; then: the tipping-up of the lateral unit (5) placed above the other, in a folded position; this action bringing about the extension of a wing of the roof; and on a third time: the tipping-up of the lateral unit placed under, this action bringing about the extension of the last wing of the roof.

The distribution block allows the folding according to the inverse way.

5. Mobile habitation like a pliant caravan or a camping-car, according to one of the second, third or fourth claiming, characterized by the fact that the control system (22, 23 & 24) consists of contacts (22 & 23) operated at the end of a trip by the tipping-up of certain jacks or the moving of their shaft, which allows the distribution block to be controlled and one movement to lead to another according to the predetermined cycle.

Fig. 1

Fig. 2

1

Fig. 3

Fig. 4

0 006 072

Fluide en mouvement
"    immobile
Circuit électrique

Fig. 5

3

Fig. 6